# EUROPÄISCHE PATENTSCHRIFT

(11) **EP 1 522 775 B1**
(45) Veröffentlichungstag und Bekanntmachung des Hinweises auf die Patenterteilung: **04.04.2007**
(21) Anmeldenummer: 04023708.3
(22) Anmeldetag: 05.10.2004
(51) Int. Cl.: F16K 1/38

(54) **Konisches Ventil für kryogene Medien**
Conical valve for cryogenic media
Valve conique pour des médias kryogène

(30) Priorität: 10.10.2003 DE 10347128
(43) Veröffentlichungstag der Anmeldung: 13.04.2005
(73) Patentinhaber: Linde Aktiengesellschaft, 65189 Wiesbaden (DE)
(72) Erfinder: Berghoff, Rudolf Erwin, Dr., 22088 Wedel (DE)
(74) Vertreter: Kasseckert, Rainer

(56) Entgegenhaltungen:
- DE-A- 4 033 491
- DE-A- 4 114 122
- DE-A- 10 152 764
- DE-A- 19 932 859
- FR-A- 1 246 843
- US-A- 5 312 085

## Beschreibung

Die Erfindung betrifft ein Ventil und Behälter mit einer Ventilnadel, einem Ventilgehäuse und einem Ventilsitz zum Eintrag eines kryogenen Mediums in einen Behälter, wobei die Stirnfläche der Ventilriadel bei geschlossenem Ventil sowie das Ventilgehäuse im Wesentlichen bündig mit einer inneren Oberfläche des Behälters abschließen.

Bekannt sind Ventile in mannigfaltigen Ausgestaltungen, die zum Eintrag eines Mediums in einen Behälter, vor allem wenn der Behälter mit einem Material gefüllt ist und gehobenen hygienischen Anforderungen genügen soll, unzureichend geeignet sind. Als problematisch erweist sich dabei insbesondere ein Eindringen der Behälterfüllung in Vertiefungen und Spalte, die für die herkömmlichen Ventile charakteristisch sind. Ein Ventil nach dem Oberbegriff ist aus der DE 101 52 764 A1 bekannt.

Der Erfindung liegt die Aufgabe zugrunde, ein verbessertes Ventil und Behälter zur Verfügung zu stellen, das einen effizienten und wirtschaftlichen Eintrag eines Mediums in einen Behälter ermöglicht, auch im Hinblick auf den Reinigungsaufwand für den Behälter, wenn dieser gehobenen hygienischen Anforderungen unterliegt.

Die gestellte Aufgabe wird dadurch gelöst, dass das strinseitige Ende der Ventilnadel als Konus geformt ist, dessen größter Durchmesser an der Stirnfläche der Ventilnadel auftritt. Diese Lösung bietet den Vorteil, dass der sich verengende Teil der Ventilnadel hinter der Stirnfläche mit einen zunehmenden Abstand zum Ventilkörper hat wodurch der Kälteübertrag durch Wärmeleitung deutlich verringert wird. Dies verbessert die Erhaltung der Passgenauigkeit und erhöht die Lebensdauer des Ventils.

Vorteilhaft ist der Ventilsitz im Wesentlichen in einer Ebene mit einer äußeren Oberfläche des Behälters oder in einem geringen Abstand zu dieser Ebene angebracht. Diese Ausgestaltung der Erfindung weist auch konstruktive Vorteile auf.

Bevorzugt ist die Ventilnadel bei geöffnetem Ventil fliegend gelagert. Besonders bevorzugt ist ein Kanal zur Zufuhr des Mediums in das Innere des Ventils vorgesehen, dessen Längsachse in einem Winkel zwischen 30 Grad und 90 Grad zur Längsachse der Ventilnadel angeordnet ist. Die Ventilnadel wird somit vom einzutragenden Medium seitlich angeströmt.

Zweckmäßigerweise sind zwischen dem Behälter und dem Ventilgehäuse und/oder zwischen dem Ventilgehäuse und der Ventilnadel Passungen mit geringen Toleranzfeldem vorgesehen.

Des Weiteren ist die Verwendung eines Ventils nach einem der Ansprüche 1 bis 5 Gegenstand der Erfindung. Mit besonderem Vorteil ist ein derartiges Ventil zum Eintrag eines kryogenen Mediums in einen Behälter vorgesehen, insbesondere in einen Behälter, der Lebensmittel enthält.

Die Erfindung weist eine Reihe von Vorteilen auf:

Beim Einbau eines erfindungsgemäßen Ventils und Behälters bleibt die Oberfläche der Behälterinnenwand nahezu unverändert und glatt. Dies ist vor allem für Behälter die Lebensmittel enthalten und regelmäßig gereinigt werden müssen von großem Vorteil. Das Risiko einer bakteriologischen Kontamination durch Lebensmittelreste, die bei der Reinigung nicht erfaßt wurden, kann dadurch wirksam gesenkt werden.

Beim Schließen eines erfindungsgemäßen Ventils und Behälters wird das Ventil von jeglichem aus dem Inneren des Behälters in das geöffnete Ventil eingedrungenem Material befreit. Es erweist sich als besonderer Vorteil, dass das Ventil bevorzugt so eingesetzt wird, dass es in Richtung auf das Material im Behälter zu schließt. Dies ist beispielsweise für pastöse Lebensmittel in einem Misch-, Kühl- oder Kochbehälter, in den ein Medium wie z.B. ein flüssiges und/oder inertes Gas eingetragen wird, von Vorteil.

Die Erfindung sowie weitere Einzelheiten der Erfindung werden im Folgenden anhand eines in den Figuren dargestellten Ausführungsbeispiels näher erläutert: Hierbei zeigen die
- Figur 1: eine schematische Schnittdarstellung eines erfindungsgemäßen Ventils an einem Behälter, wobei das Ventil geöffnet dargestellt ist,
- Figur 2: eine schematische Schnittdarstellung eines erfindungsgemäßen Ventils an einem Behälter, wobei das Ventil geschlossen dargestellt ist,

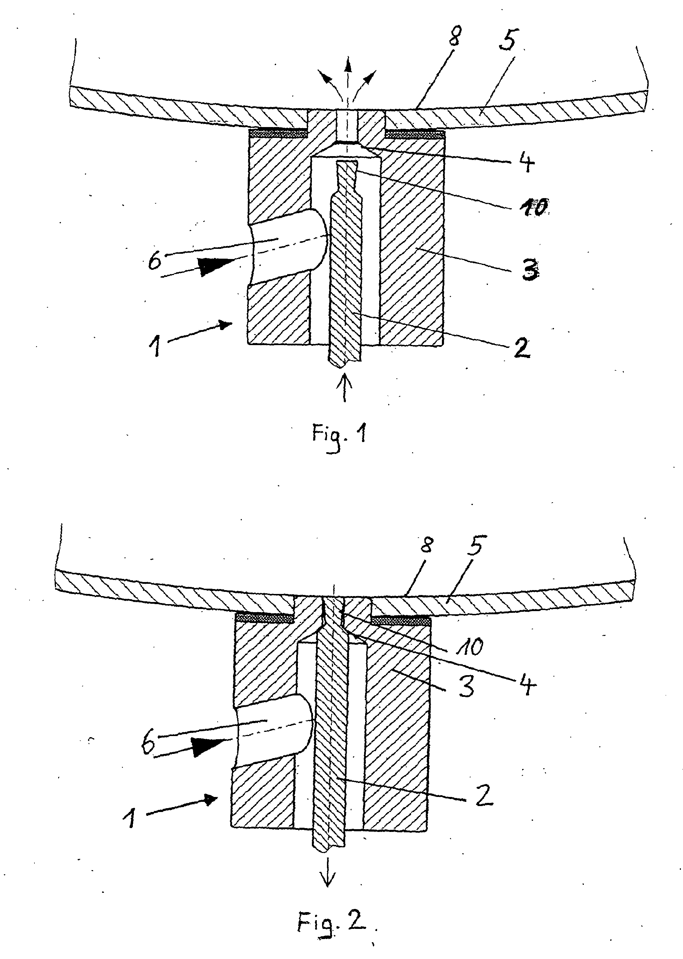

Im Einzelnen zeigt die Figur 1 ein erfindungsgemäßes Ventil 1 mit einer Ventilnadel 2, einem Ventilgehäuse 3 und einem Ventilsitz 4. An der Ventilnadel 2 ist das erfindungsgemäße konische Stück 10 am strinseitigen Ende der Ventilnadel 2 deutlich als Konus 10 zu erkennen, dessen größter Durchmesser auf Höhe der Stirnfläche der Ventilnadel auftritt.

Ein Medium, z.B. ein kryogenes Kühlmittel wie flüssiger Stickstoff oder flüssiges Kohlendioxid, das mit Hilfe des erfindungsgemäßen Ventils 1 in einen Behälter 5 eingebracht werden soll, passiert zunächst den Kanal 6, der mit einem Reservoir für das Medium in Verbindung steht (nicht dargestellt). Der Kanal 6 führt in das Innere des Ventils 1, wobei seine Längsachse in diesem Beispiel in etwa 75 Grad gegen die Längsachse der Ventilnadel geneigt ist.

Durch diese Anordnung ergeben sich besonders für den Eintrag eines verflüssigten Gases (z.B. von flüssigem Stickstoff) Vorteile. Der flüssige Stickstoff strömt aus seinem Reservoir, in dem er als siedende Flüssigkeit vorliegt, in den Kanal 6 und trifft als seitliche Antrömung auf die Ventilnadel 2. Die bei geöffnetem Ventil 1 fliegend gelagerte Ventilnadel 2 wird dadurch in Schwingungen versetzt. Da beim Einsatz einer siedenden Flüssigkeit zwangsläufig ein gasförmiger Anteil in den Zufuhrleitungen anfällt, liegt ein großer Vorteil darin, dass durch die Schwingungen der Ventilnadel 2 der aus der Flüssigkeit verdampfende gasförmige Anteil mit der Flüssigkeit durchmischt wird, so dass vorteilhaft ein annähernd homogenes Medium in den Behälter eingetragen werden kann. Diese Durchmischung wirkt sich auch auf den Eintragsimpuls des Gemisches in den Behälter und in ein im Behälter vorhandenes Material günstig aus. So kann auch bei zähem Material, wie beispielsweise Teig oder Fleischmasse zur Wurstherstellung, ein tief in das Material eindringender Kühlmittelstrahl erzeugt werden, der eine sehr gute Durchmischung von Material und Kühlmittel und damit einen guten Wärmeaustausch garantiert. Diese Eigenschaften verbessern besonders die Möglichkeiten für den Eintrag eines Kühlmittels durch den Boden eines Behälters (siehe auch Figur 3); da das eingetragene Kühlmittel auch zuverlässig aus dem Ventilbereich wegtransportiert wird.

Die Figur 2 zeigt ein erfindungsgemäßes Ventil 1, das geschlossen ist. Der Eintrag des Mediums in den Behälter 5 ist unterbrochen. Vorteilhaft schließt die Stirnfläche 7 der Ventilnadel 2 im Wesentlichen bündig mit der inneren Oberfläche 8 des Behälters 5 ab. Ebenso ist der im Wesentlichen bündige Abschluss des Ventilgehäuses 3 mit der inneren Oberfläche 7 des Behälters 5 gezeigt, sowie der Abstand zwischen dem Konus 10 und dem Ventilgehäuse 3 im Bereich des Konus 10. Diese Ausgestaltung verhindert unerwünschte Ablagerungen von Material, das sich im Inneren des Behälters befindet, im Bereich des erfindungsgemäßen Ventils 1 und ermöglicht eine lange Lebensdauer des Ventils 1.

Die vorliegende Erfindung ist besonders zum Kühlen und Gefrieren von flüssigen, pastösen und stückigen Produkten, insbesondere von Lebensmittelprodukten oder pharmazeutischen Produkten, geeignet.

## Patentansprüche

1. Ventil (1) und Behälter mit einer Ventilnadel (2), einem Ventilgehäuse (3) und einem Ventilsitz (4) zum Eintrag eines kryogenen Mediums in den Behälter (5), wobei die Stirnfläche (7) der Ventilnadel (2) bei geschlossenem Ventil (1) sowie das Ventilgehäuse (3) im Wesentlichen bündig mit einer inneren Oberfläche (8) des Behälters (5) abschließen, **dadurch gekennzeichnet, dass** das strinseitige Ende der Ventilnadel als Konus geformt ist, dessen größter Durchmesser an der Stirnfläche der Ventilnadel auftritt.

2. Ventil (1) und Behälter nach Anspruch 1, **dadurch gekennzeichnet, dass** der Ventilsitz (4) im Wesentlichen in einer Ebene mit einer äußeren Oberfläche des Behälters oder in einem geringen Abstand zu dieser Ebene angebracht ist.

3. Ventil (1) und Behälter nach Anspruch 1 oder 2, **dadurch gekennzeichnet, dass** die Ventilnadel (2) bei geöffnetem Ventil (1) fliegend gelagert ist.

4. Ventil (1) und Behälter nach einem der Ansprüche 1 bis 3, **dadurch gekennzeichnet, dass** ein Kanal (6) zur Zufuhr des Mediums in das Innere des Ventils (1) vorgesehen ist, dessen Längsachse in einem Winkel zwischen 30 Grad und 90 Grad zur Längsachse der Ventilnadel (2) angeordnet ist.

5. Ventil (1) und Behälter nach einem der Ansprüche 1 bis 4, **dadurch gekennzeichnet, dass** zwischen dem Behälter (5) und dem Ventilgehäuse (3) und/oder zwischen dem Ventilgehäuse (3) und der Ventilnadel (2) Passungen mit geringen Toleranzfeldern vorgesehen sind.

6. Verwendung eines Ventils (1) und Behälters nach einem der Ansprüche 1 bis 5 zum Eintrag eines kryogenen Mediums in einen Behälter (5), der Lebensmittel enthält.

## Claims

1. Valve (1) and container, with a valve needle (2), with a valve housing (3) and with a valve seat (4) for the introduction of a cryogenic medium into the container (5), the front face (7) of the valve needle (2), with the valve (1) closed, and also the valve housing (3) being essentially flush with an inner surface (8) of the container (5), **characterized in that** the front-face end of the valve needle is shaped as a cone, the largest diameter of which occurs on the front face of the valve needle.

2. Valve (1) and container according to Claim 1, **characterized in that** the valve seat (4) is formed essentially in one plane with an outer surface of the container or at a short distance from this plane.

3. Valve (1) and container according to Claim 1 or 2, **characterized in that**, with the valve (1) open, the valve needle (2) is mounted in a suspended manner.

4. Valve (1) and container according to one of Claims 1 to 3, **characterized in that** a duct (6) for feeding the medium into the interior of the valve (1) is provided, the longitudinal axis of which is arranged at an angle of between 30 degrees and 90 degrees to the longitudinal axis of the valve needle (2).

5. Valve (1) and container according to one of Claims 1 to 4, **characterized in that** fits with low tolerance ranges are provided between the container (5) and the valve housing (3) and/or between the valve housing (3) and the valve needle (2).

6. Use of a valve (1) and container according to one of Claims 1 to 5 for the introduction of a cryogenic medium into a container (5) which contains food.

## Revendications

1. Soupape (1) et récipient comprenant un pointeau de soupape (2), un boîtier de soupape (3) et un siège de soupape (4) pour l'entrée d'un milieu cryogénique dans le récipient (5), la surface frontale (7) du pointeau de soupape (2), lorsque la soupape est fermée (1), ainsi que le boîtier de soupape (3), se terminant essentiellement en affleurement avec une surface interne (8) du récipient (5), **caractérisée en ce que** l'extrémité du côté frontal du pointeau de soupape est formée sous forme de cône dont le plus grand diamètre se trouve à la surface frontale du pointeau de soupape.

2. Soupape (1) et récipient selon la revendication 1, **caractérisée en ce que** le siège de soupape (4) est monté essentiellement dans un plan avec une surface extérieure du récipient ou bien à faible distance par rapport à ce plan.

3. Soupape (1) et récipient selon la revendication 1 ou 2, **caractérisée en ce que** le pointeau de soupape (2) est monté volant lorsque la soupape est ouverte (1).

4. Soupape (1) et récipient selon l'une quelconque des revendications 1 à 3, **caractérisée en ce qu'**un canal (6) pour l'afflux du milieu à l'intérieur de la soupape (1) est prévu, dont l'axe longitudinal est disposé suivant un angle de 30 à 90 degrés par rapport à l'axe longitudinal du pointeau de soupape (2).

5. Soupape (1) et récipient selon l'une quelconque des revendications 1 à 4, **caractérisée en ce que** des ajustements à faibles plages de tolérances sont prévus entre le récipient (5) et le boîtier de soupape (3) et/ou entre le boîtier de soupape (3) et le pointeau de soupape (2).

6. Utilisation d'une soupape (1) et d'un récipient selon l'une quelconque des revendications 1 à 5, pour l'entrée d'un milieu cryogénique dans un récipient (5) qui contient des produits alimentaires.
